# EUROPEAN PATENT APPLICATION

(11) **EP 1 617 546 A2**
(43) Date of publication of application: **18.01.2006**
(21) Application number: 05254358.4
(22) Date of filing: 12.07.2005
(51) Int. Cl.: H02K 41/03

(54) **Linear motor for use in machine tool**

(30) Priority: 16.07.2004 JP 2004210489
(71) Applicant: Shin-Etsu Chemical Co., Ltd., Chiyoda-ku, Tokyo (JP)
(72) Inventor: Miyata, Koji, Magnetic Research & Dev. Center, Takefu-shi Fukui-ken (JP); Uchida, Masanobu, Magnetic Research & Dev. Center, Takefu-shi Fukui-ken (JP); Ohashi, Ken, Magnetic Research & Dev. Center, Takefu-shi Fukui-ken (JP)
(74) Representative: Hopley, Joanne Selina

(57) **Abstract**

Provided is a linear motor that improves the processing speed of machine tools, and also provided is a linear motor that can improve the thrust in order to achieve high acceleration. More specifically, provided is a linear motor for use in a machine tool comprising linear motor units, each unit comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; and the movers in which armature cores wound with armature coils are disposed such that the armature cores are opposed to the rows of the permanent magnets on the both faces of the stator, wherein the linear motor units are disposed in parallel. When the number of the linear motor units is N and a magnet pitch, which is the sum of the width of each of the permanent magnets and the distance between adjacent permanent magnets, is τ, the linear motor units are preferably disposed such that the linear motor units are displaced in the moving direction of the movers by a natural number multiple of τ/N.

## Description

### BACKGROUND OF THE INVENTION

### 1. Field of the Invention

The present invention relates to a permanent magnet type linear motor that is used broadly for the purpose of, for example, driving a moving part of a machine tool.

### 2. Description of the Related Art

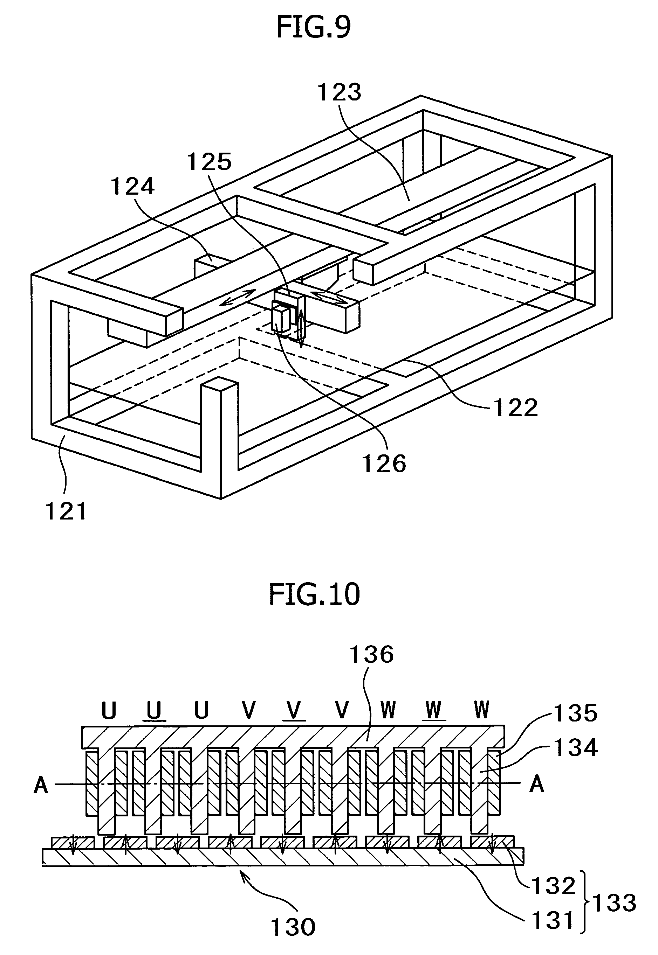

FIG. 9 is a perspective view showing an example of a laser processing machine. There is a table 122 above a frame 121 shown in FIG. 9, and a workpiece (not shown) to be processed is placed on the table 122. Moreover, a driving device 123 that can move in the X-axis direction is mounted above the frame 121, and a driving device 124 that can move in the Y-axis direction is mounted to the X-axis direction driving device 123 via a fitting. A driving device 125 that can move in the Z-axis direction is mounted to the Y-axis direction driving device 124, and a torch 126 for emitting a laser beam is mounted to the Z-axis direction driving device 125. In FIG. 9, the wiring of the driving devices, a control device, and components for delivering the laser beam are omitted. In the laser processing machine, the X- and Y-axis direction driving devices are controlled by the control device to cut the workpiece to a predetermined shape while exposing the workpiece to the laser beam from the torch mounted on the tip. Moreover, in order to focus the laser beam, the distance between the torch and the workpiece is controlled using the Z-axis direction driving device. In conventional laser processing machines, driving devices constituted by a rotary servomotor and a ball screw have been used. However, there have been limitations in high-speed processing, and the limit has been about 20 m/minute at fast forward speed. Furthermore, in the cases of workpieces having a long length of more than 3 m, there has been a problem in that processing accuracy is reduced due to, for example, bending of the ball screw. Thus, replacement of the driving device part by a linear motor has been considered.

Since a machine tool needs a large thrust, a linear motor having a stator in which a plurality of permanent magnets are mounted on a plate-like yoke at even intervals such that the polarities of the permanent magnets alternate in a direction in which a mover moves, and the mover that is constituted by armature cores and armature coils and that is opposed to the row of the magnets of the stator is used.

Conventional linear motors associated with the present invention will be described with reference to FIGS. 10 to 15.

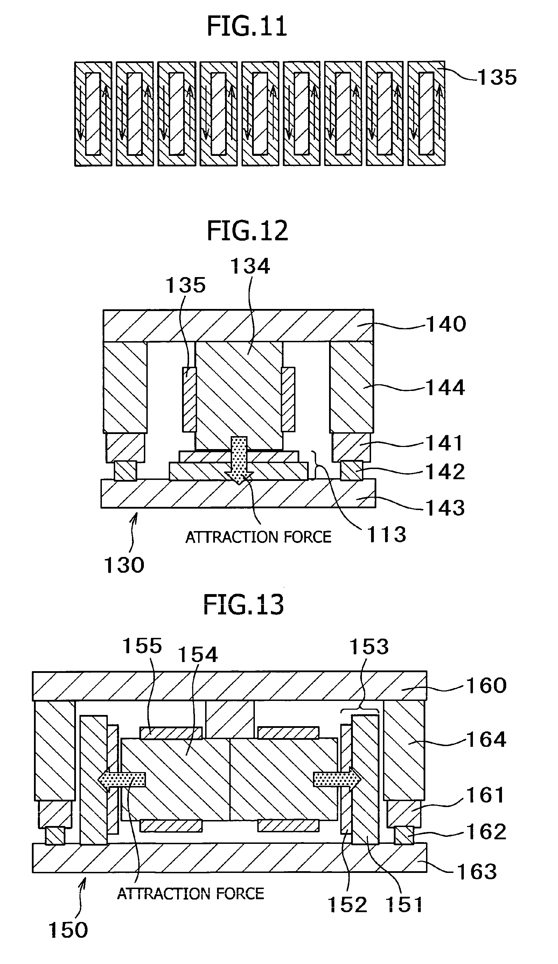

FIG. 10 is a side view of a conventional linear motor 130 of a type in which coils move above a row of a plurality of permanent magnets, and FIG. 11 is a cross-sectional view taken along the line A-A in FIG. 10. As shown in FIG. 10, this conventional linear motor 130 is constituted by a stator 133 in which a plurality of permanent magnets 132 are mounted on an iron plate 131 at even intervals such that the polarities of the permanent magnets are perpendicular to a direction in which a mover 136 moves and alternate in the moving direction, and the mover 136 in which armature coils 135 are wound around armature cores 134 that are made of a magnetic material and that are opposed to the row of the permanent magnets. The armature coils 135 are concentratedly wound around the armature cores 134, and are in the U, V, or W phase for three phase balance.

In the linear motor 130 shown in FIG. 10, eight permanent magnets are opposed to nine armature cores 134, and in order to produce magnetic fields of eight poles by passing a three-phase current through the armature coils 135, the coils in the respective phases are disposed in positions as shown in FIG. 10. If the armature coils 135 are let to produce magnetic fields by controlling the phase of the current with respect to magnetic fields produced by the permanent magnets 132, then the mover 136 that is supported by a retaining mechanism (not shown) moves above the stator 133. Arrows given for the respective permanent magnets 132 in FIG. 10 indicate the magnetization direction, and arrows given for the respective armature coils 135 in FIG. 11 indicate the winding direction.

FIG. 12 shows a cross-sectional view of the conventional linear motor 130 in a state in which the linear motor 130 is supported by the retaining mechanism, when viewed from the moving direction. As shown in FIG. 12, the mover 136 (the armature core 134 around which the armature coil 135 is wound) is fixed to the bottom of a table 140, and LM (Linear Motion) blocks 141 for guiding the mover 136 are fixed to the tips of vertical frames 144 vertically extending from both ends of the bottom of this table 140. The stator 133 is fixed on a base plate 143 of the linear motor, and other LM rails 142 that pair off with the above-mentioned LM blocks 141 are provided on both ends of the base plate 143.

When the linear motor shown in FIG. 10 is incorporated, a very large magnetic attraction force works between the permanent magnets 132 and the armature cores 134, and the magnitude of the force is about several times greater than the rated thrust. Therefore, a large force also works between the LM blocks 141 and the LM rails 142, so that the frictional force becomes very large, and thus there also has been a problem in that the lifetime of the guide is reduced.

In order to solve this problem, Japanese Patent Application Unexamined Publication No. 10-257750/1998 discloses a linear motor 150 in which, as shown in FIG. 13, two stators 153 (each comprising an iron plate 151 and a permanent magnet 152) are opposed to each other, and a mover 156 (comprising armature cores 154 and armature coils 155) moves between the stators 153. In this manner, the attraction forces between the mover and the magnet rows cancel each other out, and thus the load on the mover guide can be reduced. However, in the configuration shown in FIG. 13, the iron plate 151 of each stator is required to have a certain amount of thickness in order to make the iron plate upright with high accuracy so that the iron plate 151 is thicker than the iron plate in FIG. 12. Moreover, the size of a base plate 163 is increased, and therefore the weight of the entire driving device is increased. As has been described with the laser processing machine in FIG. 9, the Y-axis direction driving device and the Z-axis direction driving device are mounted on the X-axis direction driving device, so that if the weight of the driving device is increased, then the thrust has to be increased to achieve the same acceleration, resulting in an increase in the size of the driving device. Thus, it is desired to reduce the weight of the driving device (linear motor). In order to reduce the weight of the linear motor, it is effective to reduce the weights of the stator and the base plate of the driving device that are disposed throughout the entire driving region. It should be noted that FIG. 13 also shows a table 160, LM blocks 161, LM rails 162, the base plate 163, and vertical plates 164.

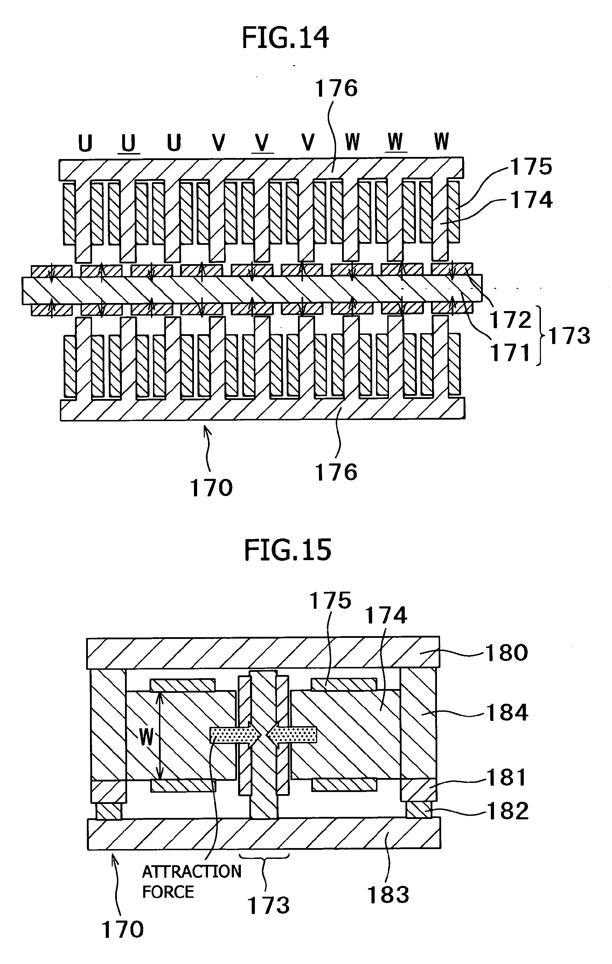

Thus, a linear motor 170 disclosed in Japanese Patent Application Unexamined Publication No. 2002-34231 and shown in FIG. 14 is constituted by a stator 173 in which a plurality of permanent magnets 172 are mounted on a single iron plate 171 at even intervals such that the polarities of the permanent magnets alternate in a direction in which movers 176 move, and the movers 176 in which armature coils 175 are wound around respective armature cores (magnetic cores) 174 that are made of a magnetic material and that are opposed to the rows of these permanent magnets. The winding method of the armature coils 175 is the same as in the conventional linear motor 130. FIG. 15 is a cross-sectional view of the above-mentioned linear motor 170 in a state in which the linear motor is supported by the retaining mechanism, when viewed from the moving direction. FIG. 15 also shows a table 180, LM blocks 181, LM rails 182, a base plate 183, and vertical plates 184. The thickness of the iron plate of the linear motor 170 in FIG. 15 is almost the same as that of the linear motor 150 in FIG. 13, and the number of iron plates in the linear motor 170 is smaller than that in the linear motor 150 by one, so that the weight of the entire linear motor is reduced.

There is a demand for high-speed and high-acceleration linear motors, and it is required to increase the thrust. Possible methods for increasing the thrust of the linear motor in FIG. 15 are to connect a plurality of movers in the moving direction or to increase the width W of the cores of the mover. With the former method, the length of the movers in the moving direction is increased, resulting in a reduction of the range of movement. With the latter method, the width W of the mover cores is increased and at the same time the width of the stator is increased, so that the stator is elongated, and furthermore, since the stator 173 is supported by the base plate 183 in a cantilever manner, the stator 173 tends to bend. Thus, the widths of the air gaps between the rows of the stator magnets and the mover cores become uneven between both sides of the magnet rows. Consequently, the attraction forces between the mover cores and the magnet rows do not cancel out between the both sides of the stator magnet rows, and a load is applied on the mover guide, and thus there is a problem in that the lifetime of the guide is reduced.

### SUMMARY OF THE INVENTION

It is an object of the present invention to provide a linear motor that improves the processing speed of machine tools, and also to provide a linear motor that can improve the thrust in order to achieve high-acceleration.

The present invention provides a linear motor for use in a machine tool comprising linear motor units, each unit comprising: a stator in which a plurality of permanent magnets having the same shape are mounted on both faces of a plate-like yoke at even intervals such that the permanent magnets have polarities being perpendicular to a direction in which a pair of movers move and alternating in the moving direction; and the movers in which armature cores wound with armature coils are disposed such that the armature cores are opposed to the rows of the permanent magnets on the both faces of the stator, wherein the linear motor units are disposed in parallel.

When the number of the linear motor units is N, and a magnet pitch, which is the sum of the width of each of the permanent magnets and a gap distance between adjacent permanent magnets, is τ, the linear motor units are preferably disposed such that the linear motor units are displaced in the moving direction of the movers by a natural number multiple of τ/N.

Moreover, the present invention provides a laser processing machine in which this permanent magnet type linear motor is used for a three-dimensional moving mechanism. The present invention provides a machine tool comprising the linear motor. Examples of the machine tool may include MC (machining center) and an electric discharge machine.

According to the present invention, by disposing a plurality of linear motor units in parallel, the thrust can be increased to achieve high-acceleration, and thus high-speed processing can be performed. Moreover, in a preferred embodiment in which the pitch is taken as τ and the number of the linear motor units is taken as N, by disposing the permanent magnet rows and the mover cores opposed to the permanent magnet rows such that the permanent magnet rows and the mover cores opposed to the permanent magnet rows are displaced by a natural number multiple of τ /N, the cogging force can be significantly reduced, and thus high-accuracy processing becomes possible.

### BRIEF DESCRIPTION OF THE DRAWINGS

FIG. 1 is a diagram showing a linear motor according to a first embodiment of the present invention.
FIG. 2 is a diagram showing a linear motor according to a second embodiment of the present invention.
FIG. 3 is a diagram showing waveforms of cogging forces of a present example and a conventional example.
FIG. 4 is a diagram showing a linear motor according to a third embodiment of the present invention.
FIG. 5 is a diagram showing a relationship between the difference ΔH of an auxiliary core and the cogging force of the third embodiment of the present invention.
FIG. 6 is a diagram showing a linear motor according to a fourth embodiment of the present invention.
FIG. 7 is a diagram showing a linear motor according to a fifth embodiment of the present invention.
FIG. 8 is a diagram showing a linear motor according to a sixth embodiment of the present invention.
FIG. 9 shows a cross-sectional view for explaining a laser processing machine.
FIG. 10 is a diagram showing a relationship between a mover and a stator of a conventional linear motor.
FIG. 11 is a cross-sectional view taken along the line A-A in FIG. 10.
FIG. 12 is a diagram showing a retaining mechanism of the linear motor in FIG. 10.
FIG. 13 is a diagram showing a conventional linear motor in which magnetic attraction forces cancel each other out.
FIG. 14 is a diagram showing a relationship between movers and a stator of a conventional linear motor in which magnetic attraction forces cancel each other out.
FIG. 15 is a diagram showing a retaining mechanism of the linear motor in FIG. 14.

### DETAILED DESCRIPTION OF THE PREFERRED EMBODIMENTS

Examples of the permanent magnets that are used in the present invention include, but not particularly limited to, Nd- and Sm-based magnets. The orientation of the magnets is perpendicular to the yoke.

There is no particular limitation regarding the armature cores that are used in the present invention, as long as they are magnetic, but it is preferable that the armature cores are formed into one piece.

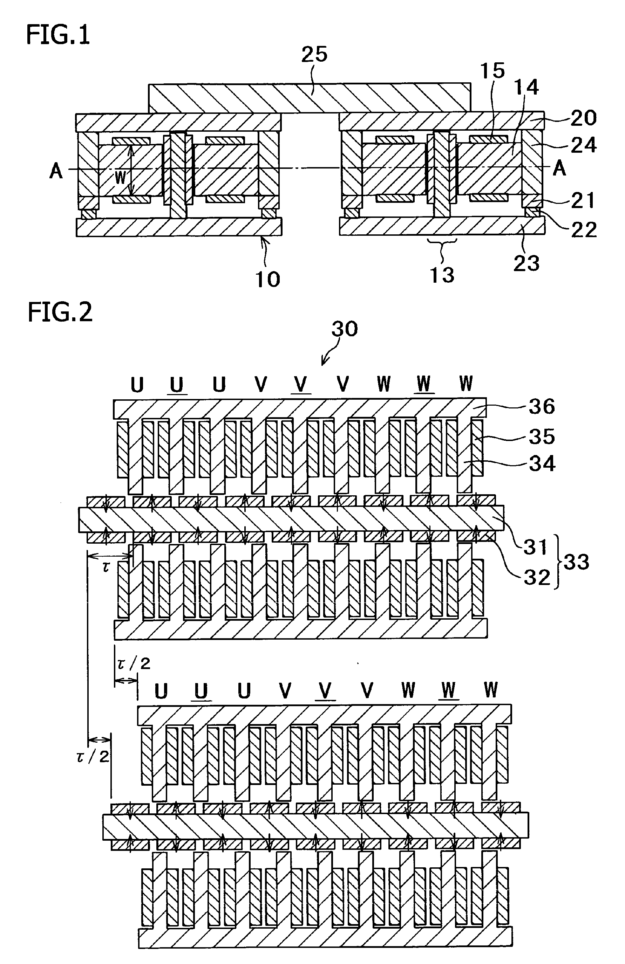

A first embodiment of the linear motor of the present invention is shown in FIG. 1. FIG. 1 is a diagram showing a linear motor 10 when viewed from the moving direction. As shown in FIG. 1, in the linear motor 10 of the present invention, two conventional linear motors 170 that have been described with FIG. 14 are disposed in parallel, and tables 20 are coupled via a coupling plate 25. In this manner, the thrust can be doubled without increasing the length of the movers in the moving direction or the width W of the mover cores.

In the linear motor 10 of the present invention, since the length of the movers in the moving direction is not increased, the range of movement of the movers is unchanged. Moreover, since the width W of the mover cores is not increased, the degree of bending of the stator is not increased, and thus the load on the mover guide is unchanged. The weight of the linear motor of the present invention is greater than that of the conventional linear motor because the number of base plates for supporting the stator and the number of mover guides are increased.

As has been described with the laser processing machine in FIG. 9, an increase in the weight of the linear motor in the Y- or Z-axis direction is not preferable because the increase in the weight of that linear motor becomes a load on the linear motor in the X- or Y-axis direction, respectively, but an increase in the weight of the linear motor in the X-axis direction would not become a load. Since the weight of the linear motor in all of the axis directions becomes a load on the X-axis linear motor, improvement of the thrust in the X-axis linear motor is required, and the linear motor of the present invention can be applied to this case.

A second embodiment of the linear motor of the present invention is shown in FIG. 2. FIG. 2 shows a cross-sectional view of a linear motor 30 taken along the line AA in FIG. 1.

Two linear motor units are arranged such that the two units are displaced by τ/2 in the moving direction. The configuration of the magnets and others is the same as in the conventional linear motor 170.

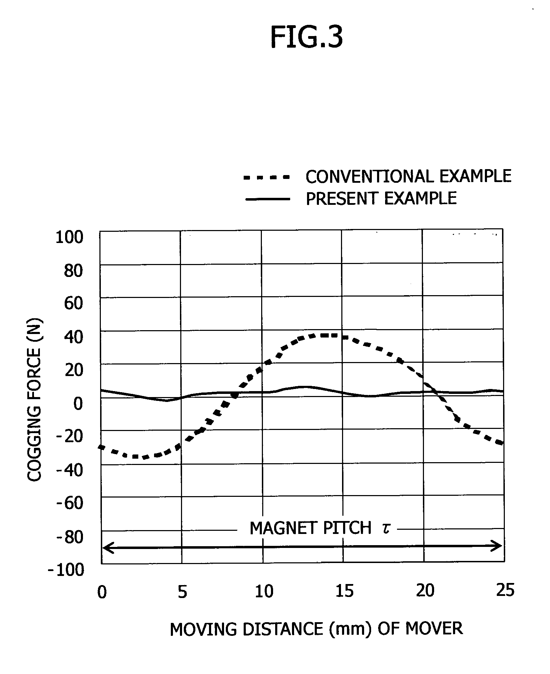

Referring to FIG. 3, a cogging force in the case where the two linear motor units in FIG. 2 are arranged in parallel and are displaced in the moving direction by 1/2 of the magnet pitch will be described.

In FIG. 3, the cogging force of the linear motor 170 of the conventional example in FIG. 14 is shown by a broken line. The cogging force is a force that works periodically when a mover moves, in the traveling direction of the mover or the opposite direction, and one cycle of the cogging force corresponds to the pitch of the magnets. If the cogging is large, then position control of the linear motor is not performed appropriately, and thus there is a problem in that the processing accuracy of the laser processing machine deteriorates. In the case of the conventional example, the difference between the maximum and minimum points is 66 N. When the linear motor 170 of the conventional example is provided with another pair of movers having a cogging force whose waveform has a phase shifted by 180° from that of the existing pair of movers, the cogging forces cancel each other out due to synthesis of the waveforms. Thus, as shown in FIG. 2, a second linear motor unit was disposed such that the second linear motor unit was displaced in the moving direction by 1/2 of the magnet pitch, which corresponds to 180° of the waveform of the cogging force.

In FIG. 3, the cogging force of the linear motor 30 of the example of the present invention is shown by a solid line. In the linear motor of this example, the cogging force was reduced, and the difference between the maximum and minimum points was 10 N. It should be noted that since the size of the linear motor of the conventional example in FIG. 14 is the same as that of one linear motor unit of the example of the present invention, the thrust in the present invention that is generated when a current flows is doubled. In this manner, by disposing two units of the mover cores in parallel such that the two units are displaced in the moving direction by 1/2 of the magnet pitch, the thrust that is generated when a current flows can be doubled, and furthermore the cogging force can be reduced to 1/7.

Although the case where the number of linear motor units is two has been illustrated in the above-described example of the present invention, in the cases where the number of linear motor units is more than one, when the permanent magnet pitch is τ and the number of a plurality of linear motor units is N, the same effects can be achieved by disposing the permanent magnet rows and the mover cores opposed to the permanent magnet rows such that the permanent magnet rows and the mover cores opposed to the permanent magnet rows are displaced by a natural number multiple of τ /N.

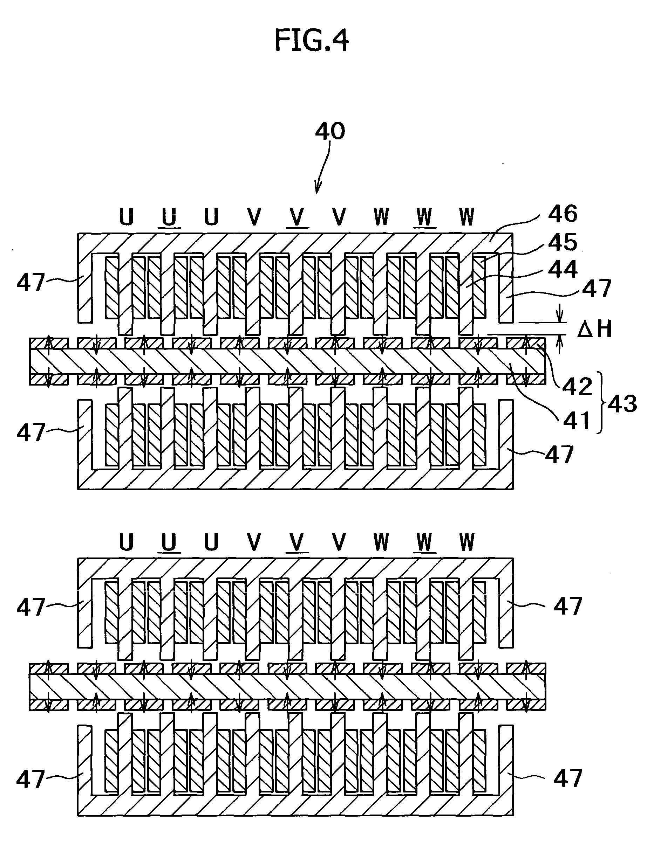

A third embodiment of the linear motor of the present invention is shown in FIG. 4. FIG. 4 shows a cross-sectional view of a linear motor 40 taken along the line AA in FIG. 1.

As shown in FIG. 4, the linear motor 40 of the present invention has magnet cores (also referred to as auxiliary cores) 47 that are mounted on both ends of armature cores 44 and that have the same tooth width as the armature cores 44 and a shorter tooth length than the armature cores 44. The stators and the movers other than these magnetic cores are the same as in the linear motor of the present invention shown in FIG. 1 or 2, and the thrust is twice greater than that of the conventional example in FIG. 14.

There is no particular limitation regarding the auxiliary cores that are used in the present invention, as long as they are magnetic, but it is preferable that the auxiliary cores and the armature cores (also referred to as main cores) are formed in one piece. That is, although the auxiliary cores may be made of the same material as the main cores or a different material from that of the main cores, it is preferable that the auxiliary cores are made of the same material as the main cores and can be formed integrally with the main cores. However, the auxiliary cores are not wound with coils. Specific examples of the material of the auxiliary cores include silicon steel, low carbon steel and magnetic stainless steel.

According to the present invention, the auxiliary cores that are disposed on both ends of each row of the movers is shorter than the inner main cores, and the difference ΔH in length between the auxiliary cores and the inner main cores is preferably 5 mm or more and more preferably 6 to 15 mm. The length of the magnetic cores is as described above, and the cross-sectional shape of the magnetic cores is preferably, but not particularly limited to, rectangular or trapezoid.

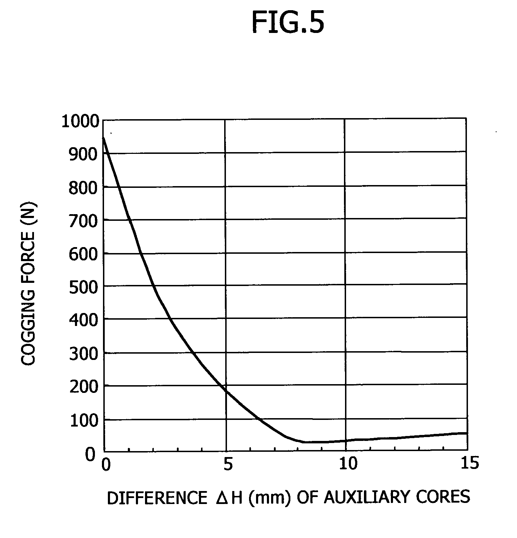

Referring to FIG. 5, the relationship between the difference △H of the auxiliary cores of the linear motor in FIG. 4 and the cogging force will be described. As shown in FIG. 3, one cycle of the cogging force of the linear motor corresponds to the magnet pitch. The cogging force is a total of the magnetic attraction forces that are generated between the magnets and the teeth of the armature cores. Although the magnetic attraction forces that are generated at the teeth inside the armature cores cancel each other out, the magnetic attraction forces that are generated at both ends of the armatures do not cancel each other out sufficiently, and thus these forces appear as the cogging force having a cycle corresponding to the magnet pitch. Therefore, if the magnetic flux distribution at both ends of the armature cores is adjusted appropriately, then the cogging force can be reduced. In the example in FIG. 5, as the difference Δ H increased, the cogging force decreased, and when H=8mm, the cogging force was the minimum value, 30 N. It should be noted that when the difference ΔH was increased so that there were no auxiliary cores (H=34mm), the cogging force was 132 N. In this manner, by adjusting the difference Δ H of the auxiliary cores, the cogging force can be reduced.

According to the present invention, by disposing the magnetic cores (auxiliary cores) on both ends of each mover and by making the length of the magnetic cores shorter than that of the other cores, the cogging force can be significantly reduced, and thus high-accuracy processing becomes possible.

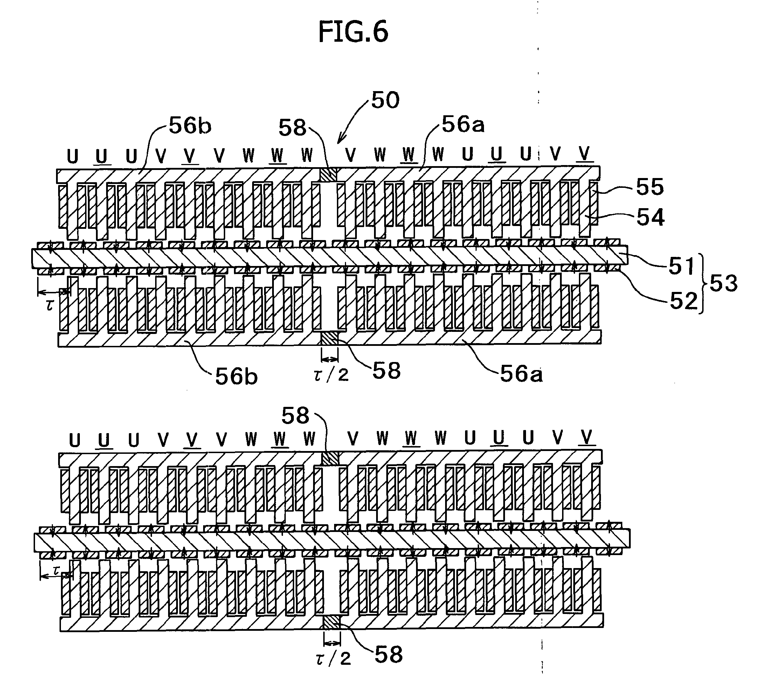

A fourth embodiment of the linear motor of the present invention is shown in FIG. 6. FIG. 6 shows a cross-sectional view of a linear motor 50 taken along the line AA in FIG. 1.

As shown in FIG. 6, each linear motor unit comprises stator 53 in which a plurality of permanent magnets 52 are mounted on a single yoke (e.g., iron plate) 51 at even intervals such that the polarities of the permanent magnets being perpendicular to a direction in which a pair of movers move and alternating in the moving direction, and the movers (each comprising two mover blocks 56a and 56b) in which armature coils 55 are wound around respective armature cores 54 that are made of a magnetic material and that are opposed to the rows of these permanent magnets 52. Each mover block has a length that is eight times longer than the stator magnet pitch, and nine teeth (armature cores) of the mover. The two mover blocks are serially disposed in the traveling direction, and preferably a spacer 58 having a size that is 1/2 of the stator magnet pitch is inserted between the two blocks. However, it is also possible that there is a space having a length that is 1/2 of the magnet pitch between the two blocks.

The spacer 58 is preferably a non-magnetic material, such as non-magnetic stainless steel or aluminum, so as to eliminate magnetic interference between the two mover blocks. Examples of the method for connecting the spacer to each mover block include a method of fixing the spacer with an adhesive and a method of mechanically fixing the spacer in conjunction with the mover to another frame.

Regarding the winding method of the armature coils 55, it is sufficient that the coils in the U, V, and W phases are disposed such that the total number of coils in each phase is three, and the arrangement of the U, V, and W phases can be chosen as appropriate. For example, if, in the first block, U, V, and W phase coils of three each are concentratedly wound around teeth in this order from the left tooth in the drawing, then, in the second block, a V phase coil is wound around the first tooth, W and U phase coils of three each are wound around teeth in this order from the second tooth, and two V phase coils are wound around the last two teeth.

FIG. 6 shows the linear motor 50 having a pair of movers each comprising two mover blocks, with the spacing between the two mover blocks being 1/2 of the magnet pitch. In this manner, the cogging force generated in the first block can be canceled out by the cogging force in the second block that is disposed with a spacing that is 1/2 of the magnet pitch, which corresponds to 180° of the waveform of the cogging force, and thus a linear motor with reduced cogging force can be realized.

According to the present invention, by disposing the two mover blocks each having a length that is eight times longer than the stator magnet pitch and having nine teeth wound with the armature coils in the respective phases of three each, and by setting the spacing between the blocks to be 1/2 of the stator magnet pitch, the cogging force can be significantly reduced, and thus high-accuracy processing becomes possible.

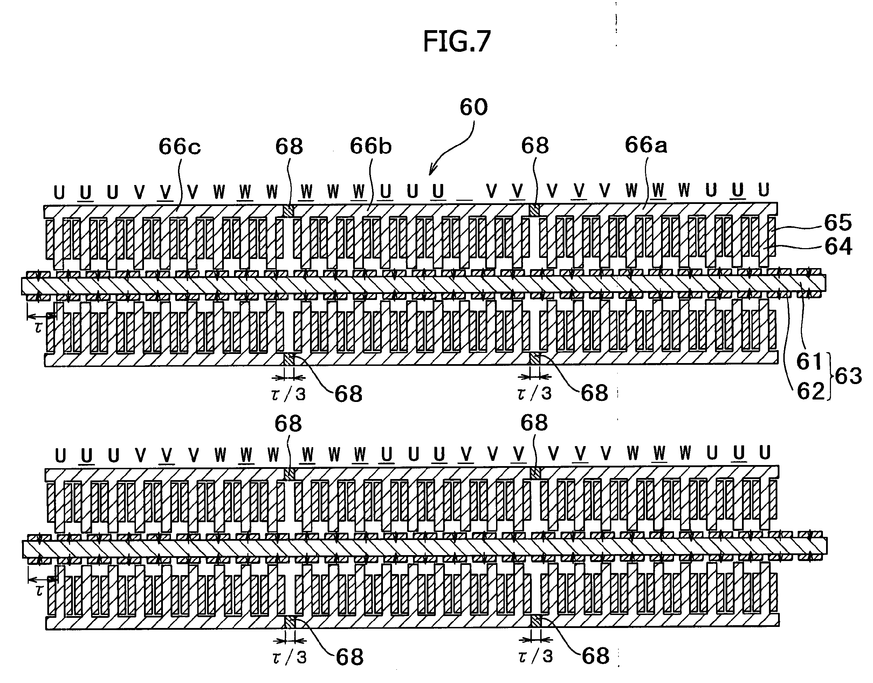

A fifth embodiment of the linear motor of the present invention is shown in FIG. 7. FIG. 7 shows a cross-sectional view of a linear motor 60 taken along the line AA in FIG. 1.

As shown in FIG. 7, each linear motor unit of the linear motor of the present invention comprises a stator 63 in which a plurality of permanent magnets 62 are mounted on a single yoke (e.g., iron plate) 61 at even intervals such that the polarities of the permanent magnets being perpendicular to a direction in which a pair of movers move and alternating in the moving direction, and the movers (each comprising three mover blocks 66a to 66c) in which armature coils 65 are wound around respective armature cores (magnetic cores) 64 that are made of a magnetic material and that are opposed to the rows of these permanent magnets. Each mover block has a length that is eight times longer than the stator magnet pitch, and nine teeth of the mover cores. The three mover blocks are serially disposed in the traveling direction, and preferably a spacer 68 having a size that is 1/3 of the stator magnet pitch is inserted between adjacent blocks. However, it is also possible that there is a space having a length that is 1/3 of the magnet pitch between adjacent blocks.

The spacer 88 is preferably a non-magnetic material, such as non-magnetic stainless steel or aluminum, so as to eliminate magnetic interference between the three mover blocks. Examples of the method for connecting the spacer to each mover block include a method of fixing the spacer with an adhesive and a method of mechanically fixing the spacer in conjunction with the mover to another frame.

Regarding the winding method of the armature coils 65, it is sufficient that the coils in the U, V, and W phases are disposed such that the total number of coils in each phase is three, and the arrangement of the U, V, and W phases can be chosen as appropriate. For example, if, in the first block, U, V, and W phase coils of three each are concentratedly wound around teeth in this order from the left tooth in the drawing, then W, U, and V phase coils of three each are wound around teeth in the second block in this order from the left tooth, and V, W, and U phase coils of three each are wound around teeth in the third block in this order from the left tooth.

FIG. 7 shows the linear motor 60 having a pair of movers each comprising three mover blocks, with the spacing between adjacent blocks being 1/3 of the magnet pitch. In this manner, the cogging forces generated in the three blocks have waveforms whose phases are shifted by 120°, and when the three waveforms are superposed, the cogging forces cancel each other out, and thus a linear motor with reduced cogging force can be realized.

According to the present invention, by disposing the three mover blocks each having a length that is eight times longer than the stator magnet pitch and having nine teeth wound with the armature coils in the respective phases of three each, and by setting the spacing between adjacent blocks to be 1/3 of the stator magnet pitch, the cogging force can be significantly reduced, and thus high-accuracy processing becomes possible.

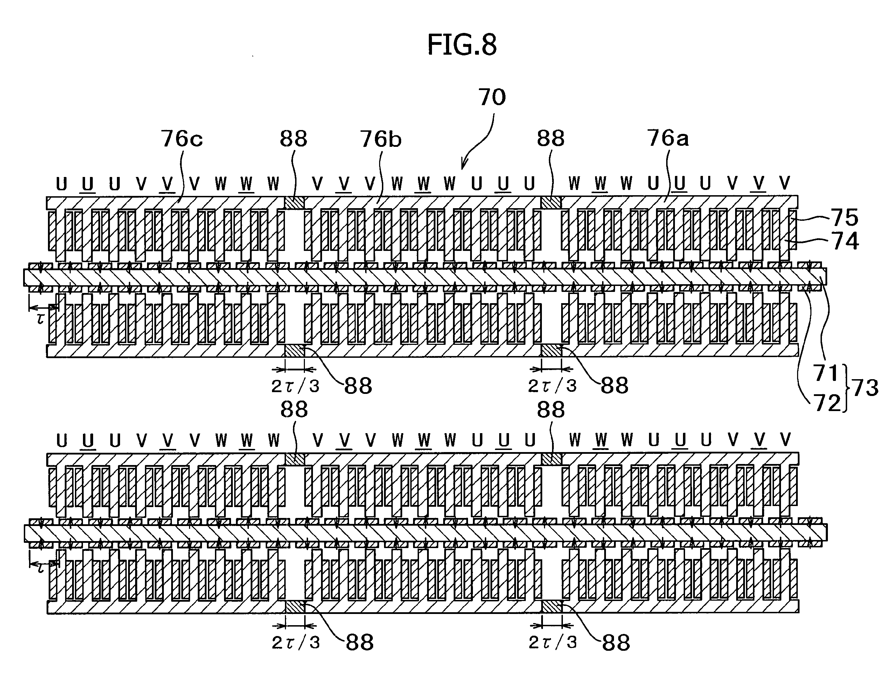

A sixth embodiment of the linear motor of the present invention is shown in FIG. 8. FIG. 8 shows a cross-sectional view of a linear motor 70 taken along the line AA in FIG. 1.

As shown in FIG. 8, each linear motor unit of the linear motor of the present invention comprises a stator 73 in which a plurality of permanent magnets 72 are mounted on a single yoke (e.g., iron plate) 71 at even intervals such that the polarities of the permanent magnets being perpendicular to a direction in which a pair of movers move and alternating in the moving direction, and the movers (each comprising three mover blocks 76a to 76c) in which armature coils 75 are wound around respective armature cores (magnetic cores) 74 that are made of a magnetic material and that are opposed to the rows of these permanent magnets. Each mover block has a length that is eight times longer than the stator magnet pitch, and nine teeth of the mover cores. The three mover blocks are serially disposed in the traveling direction, and preferably a spacer 78 having a size that is 2/3 of the stator magnet pitch is inserted between adjacent blocks. However, it is also possible that there is a space having a length that is 2/3 of the magnet pitch between adjacent blocks.

The spacer 78 is preferably a non-magnetic material, such as non-magnetic stainless steel or aluminum, so as to eliminate magnetic interference between the three mover blocks. Examples of the method for connecting the spacer to each mover block include a method of fixing the spacer with an adhesive and a method of mechanically fixing the spacer in conjunction with the mover to another frame.

Regarding the winding method of the armature coils 75, it is sufficient that the coils in the U, V, and W phases are disposed such that the total number of coils in each phase is three, and the arrangement of the U, V, and W phases can be chosen as appropriate. For example, if, in the first block, U, V, and W phase coils of three each are concentratedly wound around teeth in this order from the left tooth in the drawing, then V, W, and U phase coils of three each are wound around teeth in the second block in this order from the left tooth, and W, U, and V phase coils of three each are wound around teeth in the third block in this order from the left tooth.

FIG. 8 shows the linear motor 70 having a pair of movers each comprising three mover blocks, with the spacing between adjacent blocks being 2/3 of the magnet pitch. In this manner, the cogging forces generated in the three blocks have waveforms whose phases are shifted by 240°, and when the three waveforms are superposed, the cogging forces cancel each other out, and a linear motor with reduced cogging force can be realized.

Moreover, by disposing the three mover blocks each having a length that is eight times longer than the stator magnet pitch and having nine teeth wound with the armature coils in the respective phases of three each, the cogging force can be significantly reduced, and thus high-accuracy processing becomes possible.

The linear motor in which the auxiliary cores are provided as described above could be applied to a laser processing machine in which the linear motor was used for a three-dimensional moving mechanism in X-, Y-, and Z-axis directions. With the laser processing machine of the present invention, unevenness in the thrust is eliminated due to a reduction in the cogging force, and position control accuracy is increased, and thus high-accuracy processing can be performed. Furthermore, since a large thrust can be obtained, complicated shapes for which high acceleration is required can be processed at a high speed with high accuracy.

### Example 1

The linear motor 30 shown in FIG. 2, in which two linear motor units were disposed in parallel such that a second linear motor unit was displaced in the moving direction by 1/2 of the magnet pitch, which corresponds to 180° of the waveform of the cogging force, was used. A Nd-Fe-B based permanent magnet was used, and an iron yoke was used as the core material. Regarding the section sizes in FIG. 2, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The movers and the stators had a thickness of 50 mm in the cross-sectional direction. A solid line in FIG. 3 shows the results. As shown in the drawing, the cogging force of the present invention was reduced, and the difference between the maximum and minimum points was 10 N.

### Example 2

The linear motor 40 shown in FIG. 4, in which two linear motor units were disposed in parallel and magnetic cores (auxiliary cores) were provided in each linear motor unit, was used, and the magnetic flux distribution was adjusted by changing the difference ΔH between the face of the auxiliary cores and that of the armature cores (main cores). A Nd-Fe-B based permanent magnet was used, and an iron yoke was used as the core material. Regarding the section sizes in FIG. 4, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The movers and the stators had a thickness of 50 mm in the cross-sectional direction. As shown in FIG. 5, as the difference ΔH increases, the cogging force decreases, and when ΔH=8mm, the cogging force was the minimum value, 30 N. When the difference ΔH was increased so that there were no auxiliary cores (ΔH=34mm), the cogging force was 132 N. Thus, the cogging force could be reduced by adjusting the difference Δ H of the auxiliary cores.

### Example 3

The linear motor 50 shown in FIG. 6, in which two linear motor units were disposed in parallel and each linear motor unit comprised two mover blocks wherein the spacing between the two blocks was 1/2 of the magnet pitch, was used. A Nd-Fe-B based permanent magnet was used, and an iron yoke was used as the core material. Regarding the section sizes in FIG. 6, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke (iron plate) was 19 mm. The gap between the movers and the stator magnets was 1 mm. The length of the spacer (non-magnetic stainless steel, SUS 304) between the first and second blocks was 12.5 mm. The movers and the stators had a thickness of 50 mm in the cross-sectional direction. Regarding the cogging force at this time, the difference between the maximum and minimum points was 34 N and was smaller than 132 N for the first embodiment (the linear motor in Example 2 in which there were no auxiliary cores) in which two linear motors were merely arranged parallel to each other. It should be noted that since the two blocks were arranged in the moving direction, the thrust was twice greater than that in Example 2. Thus, by disposing the two mover blocks with a spacing that is 1/2 of the magnet pitch between them, the cogging force could be reduced.

### Example 4

The linear motor in FIG. 7 in which two linear motor units were disposed in parallel and each linear motor unit comprised three mover blocks wherein the spacing between adjacent blocks was 1/3 of the magnet pitch, was used. A Nd-Fe-B based permanent magnet was used, and an iron yoke was used as the core material. Regarding the section sizes in FIG. 7, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The length of the spacers (non-magnetic stainless steel, SUS 304) between the first and second blocks and between the second and third blocks was 8.33 mm. The movers and the stators had a thickness of 50 mm in the cross-sectional direction. Regarding the cogging force at this time, the difference between the maximum and minimum points was 30 N and was smaller than 132 N for the first embodiment (the linear motor in Example 2 in which there were no auxiliary cores) in which two linear motors were merely arranged parallel to each other. It should be noted that since the three blocks were arranged in the moving direction, the thrust was three times greater than that in Example 2. Thus, by disposing the mover cores with a spacing that is 1/3 of the magnet pitch between adjacent blocks, the cogging force could be reduced.

### Example 5

The linear motor in FIG. 8 in which two linear motor units were disposed in parallel and each linear motor unit comprised three mover blocks wherein the spacing between adjacent blocks being 2/3 of the magnet pitch, was used. A Nd-Fe-B based magnet was used, and an iron yoke was used as the core material. Regarding the section sizes in FIG. 8, the width of the magnets was 18 mm, the thickness of the magnets in the magnetization direction was 5 mm, the magnet pitch was 25 mm, the width of the teeth of the armature cores was 10 mm, the length of the teeth was 34 mm, and the thickness of the stator yoke was 19 mm. The gap between the movers and the stator magnets was 1 mm. The length of the spacers (non-magnetic stainless steel, SUS 304) between the first and second blocks and between the second and third blocks was 16.7 mm. The movers and the stators had a thickness of 50 mm in the cross-sectional direction. Regarding the cogging force at this time, the difference between the maximum and minimum points was 30 N and was smaller than 132 N for the first embodiment (the linear motor in Example 2 in which there were no auxiliary cores) in which two linear motors were merely arranged parallel to each other. It should be noted that since the three blocks were arranged in the moving direction, the thrust was three times greater than that in Example 2. Thus, by disposing the mover cores with a spacing that is 2/3 of the magnet pitch between adjacent blocks, the cogging force could be reduced.

## Claims

1. A linear motor for use in a machine tool, comprising linear motor units, each unit comprising:
a stator in which a plurality of permanent magnets having the same shape are mounted on both faces of a plate-like yoke at even intervals such that the permanent magnets have polarities being perpendicular to a direction in which a pair of movers move and alternating in the moving direction; and
the movers in which armature cores wound with armature coils are disposed such that the armature cores are opposed to rows of the permanent magnets on the both faces of the stator,
wherein the linear motor units are disposed in parallel.

2. The linear motor for use in a machine tool according to claim 1, wherein when the number of the linear motor units is N and a magnet pitch, which is a sum of the width of each of the permanent magnets and a gap distance between adjacent permanent magnets, is τ, the linear motor units are disposed such that the linear motor units are displaced in the moving direction of the movers by a natural number multiple of τ/N.

3. The linear motor for use in a machine tool according to claim 1 or 2, comprising magnetic cores that are disposed on both ends of the movers such that a distance between the magnetic cores and the rows of the permanent magnets is shorter than a distance between the armature cores and the rows of the permanent magnets.

4. The linear motor for use in a machine tool according to any one of claims 1 to 3, wherein each of the movers comprises two or more mover blocks and comprises a non-magnetic spacer between the blocks.

5. The linear motor for use in a machine tool according to any one of claims 1 to 4, wherein each of the movers comprises two mover blocks, each block having a length that is eight times longer than a magnet pitch τ, which is a sum of a width of each of the permanent magnets and a gap distance between adjacent permanent magnets, and having nine armature cores wound with the armature coils in U, V, and W phases of three each, and wherein a length of a spacing between the two blocks is set to be 1/2 of the magnet pitch τ.

6. The linear motor for use in a machine tool according to any one of claims 1 to 4, wherein each of the movers comprises three mover blocks, each block having a length that is eight times longer than a magnet pitch τ, which is a sum of a width of each of the permanent magnets and a gap distance between adjacent permanent magnets, and having nine armature cores wound with the armature coils in U, V, and W phases of three each, and wherein a length of a spacing between adjacent blocks of the three blocks is set to be 1/3 of the magnet pitch τ.

7. The linear motor for use in a machine tool according to any one of claims 1 to 4, wherein each of the movers comprises three mover blocks each having a length that is eight times longer than a magnet pitch τ, which is a sum of a width of each of the permanent magnets and a gap distance between adjacent permanent magnets, and having nine armature cores wound with the armature coils in U, V, and W phases of three each, and wherein a length of a spacing between adjacent blocks of the three blocks is set to be 2/3 of the magnet pitch τ.

8. A laser processing machine in which the linear motor according to any one of claims 1 to 7 is used for a three-dimensional moving mechanism.

9. A machine tool comprising the linear motor according to any one of claims 1 to 7.
